# EUROPEAN PATENT APPLICATION

(11) **EP 1 032 236 A1**
(43) Date of publication of application: **30.08.2000**
(21) Application number: 99301328.3
(22) Date of filing: 24.02.1999
(51) Int. Cl.: H04Q 7/38, H04B 7/185

(54) **Improved congestion control using access classes**

(71) Applicant: ICO Services Ltd., London W6 9BN (GB)
(72) Inventor: Grayson, Mark, Chiswick, London W4 2QT (GB); Mullins, Dennis Roy, London SE11 5UL (GB)
(74) Representative: Read, Matthew Charles

(57) **Abstract**

In order to control traffic congestion in a cellular satellite telecommunications network, user terminals are grouped together in different predetermined access classes which can be controlled individually in order to restrict access to the network. Cell broadcast messages are transmitted from SAN 1 via satellite 3a to user terminals UT1 in a particular cell to provide coarse access class data corresponding to sub-groups of a plurality of the individual access classes permitted or denied access to the network. This coarse data is supplied in response to a predicted call traffic demand produced by a traffic planning model, exceeding the capacity of the network. Additionally, if the demand exceeds the levels predicted by the traffic planning model due to an unpredicted demand, fine access class information is transmitted to control the individual access classes in the sub-groups. The fine access class information, when it is transmitted is detected at a higher rate than the coarse access class information.

## Description

This invention relates to controlling call traffic congestion in a mobile telecommunications system and has particular but not exclusive application to a satellite telecommunications network.

Terrestrial mobile telecommunications systems are well known and a number of different systems have developed which operate according to different standards, both analog and digital. In Europe and the Far East, excluding Japan, and elsewhere, the digital Global System Mobile (GSM) network has become popular, whereas in the USA, networks which operate according to the IS-41 recommendations such as the Advanced Mobile Phone System (AMPS) and the Digital Advanced Mobile Phone System (DAMPS) are used. In Japan, the Personal Handiphone System (PHS) and the Personal Digital Communication (PDC) network are in use. More recently, proposals have been made for a Universal Mobile Telecommunications System (UMTS). These networks are all cellular and land-based but have differences in architecture and use different signalling protocols and transmission frequency bands.

For example in GSM, mobile stations such as mobile telephone handsets communicate with a land-based network over a radio interface. Details of the subscriber are held in the network by a home location register (HLR) and communicated to visitor location registers (VLRs) when the subscriber roams to different parts of the network. Details of the subscriber are also provided to the mobile station by a smartcard known as a subscriber identity module (SIM) which is inserted in the mobile station.

Mobile telecommunication systems have been proposed that use satellite communication links between mobile user terminals and conventional terrestrial networks such as public switched telephone networks (PSTNs) and public land mobile networks (PLMNs). One network known as the IRIDIUM™ satellite cellular system is described in EP-A-0365885 and US Patent No. 5 394 561 (Motorola), which makes use of a constellation of so-called low earth orbit (LEO) satellites, that have an orbital radius of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km. Reference is directed to the ICO™ satellite cellular system described for example in GB-A-2 295 296. With this system, the satellite communications link does not permit communication between adjacent satellites. Instead, a signal from a mobile user terminal such as a mobile handset is directed firstly to the satellite and then directed to a ground station or satellite access node (SAN), connected to conventional land-based telephone networks. This has the advantage that many components of the system are compatible with known digital terrestrial cellular technology such as GSM. Also simpler satellite communication techniques can be used than with a LEO network. Reference is directed to "New Satellites for Personal Communications", Scientific American, April 1998, pp. 60 - 67, for an overview of LEO/MEO satellite networks.

In satellite communications networks, ground stations are located at different sites around the world in order to communicate with the orbiting satellites and local PLMNs. In the ICO™ system and others, a visitor location register is associated with each of the satellite ground stations to register locally the individual user terminals. The visitor location registers communicate with a home location register which may be part of the satellite network, or may be part of a PLMN, so as to permit a subscriber to roam from the PLMN to the satellite network.

Conventional mobile telephone networks include a mechanism to control call traffic congestion in the event that too many call attempts are made by mobile users, which would overload the system. Conventionally, for example in prior terrestrial GSM networks, when a mobile user attempts to make a call, the user terminal transmits a request for access to the network on a random access channel (RACH). Since call requests are made at the control of individual users, they occur essentially randomly and can lead to congestion in the network. In GSM, this problem is overcome by dividing the population of mobile stations that uses the network, into sub-populations which can be accessed individually. In GSM, the subscribers are split into ten balanced sub-populations by the home PLMN operator. Each of these sub-populations is known as an access class. The access class to which a given subscriber belongs is stored in the SIM for each mobile station. In normal load situations, all classes are allowed access. However, when the traffic needs to be cut down to avoid congestion, the network can decide to block individual access classes so as to reduce statistically the amount of permitted traffic in the network. Mobile stations belonging to the forbidden classes are refrained from using the network except in specific cases such as emergency calls.

The status of the access classes i.e. whether they are permitted access or not, is transmitted to the mobile stations on the usual cell broadcast channel (BCCH) for each cell of the network. Typically, the access class information comprises a 17 bit message signifying the status of access class 1-10 together with a further five special access classes for use by security services, public utilities, emergency services and the PLMN operator. The 17 bit message therefore needs to be repeatedly transmitted to signify the current status of the access classes. The repeated transmission of the access class information thus constitutes an overhead which undesirably uses system power and resources. For example, in a satellite system that provides a service to mobile user terminals such as telephone handsets, the BCCH is transmitted from the satellite using power from its batteries and thus the repeated transmission of the access class information would constitute an undesirable overhead.

The present invention provides an improved, alternative way of conveying access class information to mobile user terminals.

According to the invention there is provided a method of controlling call traffic congestion in a cellular telecommunications network wherein user terminals are grouped in different predetermined access classes for controlling accessibility to the network, comprising causing to be broadcast to the user terminals periodically, cell broadcast messages that include coarse access class information corresponding to subgroups of said different predetermined access classes permitted or denied access to the network in response to a first traffic congestion situation, and fine access class information corresponding to individual ones of the access classes in said subgroups permitted or denied access to the network in response to a second different traffic congestion situation.

A traffic planning model may be provided to predict call traffic demand in the network, so that the occurrence of the first and second traffic congestion situations can be determined with reference to the model. An occurrence of said first traffic congestion situation can be ascertained by determining when the call traffic demand predicted by the traffic planning model exceeds the capacity of the network. The occurrence of the second traffic congestion situation can be determined by monitoring actual demand for access to the network, and determining when the actual demand exceeds the demand predicted by the traffic planning model. The traffic planning model may predict traffic demand as a function of geographical area to which the messages are broadcast, and the time of day.

The cell broadcast messages may be classified into different categories that are transmitted at individual rates, with the coarse access class information being transmitted in one of said message categories with a relatively low periodicity and the fine access class information being transmitted in another one of the message categories of a relatively high periodicity. An indication that the fine access control data is being transmitted may be provided in a cell broadcast message of a periodicity intermediate said relatively high and low periodicity.

The invention is particularly applicable to a satellite telecommunications network, with the messages containing the coarse and fine access class information being transmitted from a satellite access node towards at least one satellite of the network. The configuration saves power both at the satellite and the user terminals.

The invention also includes a method of operating a user terminal for a cellular telecommunications network to control call traffic congestion therein wherein user terminal has been allocated an access class from a plurality thereof for controlling accessibility to the network, comprising receiving cell broadcast messages that include coarse access class information corresponding to subgroups of said different predetermined access classes permitted or denied access to the network in response to a first traffic congestion situation, and fine access class information corresponding to individual ones of the access classes in said subgroups permitted or denied access to the network in response to a second different traffic congestion situation, and controlling access of the user terminal to the network as a function of said fine access class information when received or said coarse access class information.

A determination may be made of when the fine access class information is being transmitted, so that the fine access class information is only detected when it is determined to be transmitted. This saves power.

The coarse access class information may be detected at a relatively slow rate and said fine access class information at a relatively high rate to allow the system to respond to rapid changes transmitted in the fine access class information.

The invention also includes a subsystem for transmitting the inventive cell broadcast messages and a user terminal such as a mobile telephone handset configured to receive the cell broadcast messages and control its access to the network according to the coarse and fine access class information.

In order that the invention may be more fully understood an embodiment thereof will now be described by way of example with reference to the accompanying drawings, in which:
Figure 1 is a schematic diagram of a satellite telecommunications system together with a local, land-based mobile telecommunications system, in accordance with the invention;
Figure 2 is a schematic diagram of the spot beam pattern produced by one of the satellites on the earth;
Figure 3 is a schematic frequency/time diagram showing time slots for the transmission scheme;
Figure 4 is a schematic diagram of the circuits of satellite 3a;
Figure 5 is a schematic diagram of the cell pattern produced by the spot beams of satellite 3a;
Figure 6 is a schematic diagram of a mobile user terminal;
Figure 7 is a schematic block diagram of the circuits of the user terminal shown in Figure 6;
Figure 8 illustrates a logical tree of the relationships between the data categories of BCCH messages;
Figure 9 is a schematic block diagram of activities at SBS 1 to produce BCCH messages containing coarse and/or fine access control information; and
Figure 10 illustrates a process for decoding the coarse and fine access control information at the user terminal, so as to control enablement of RACH network access requests.

### Overview of network

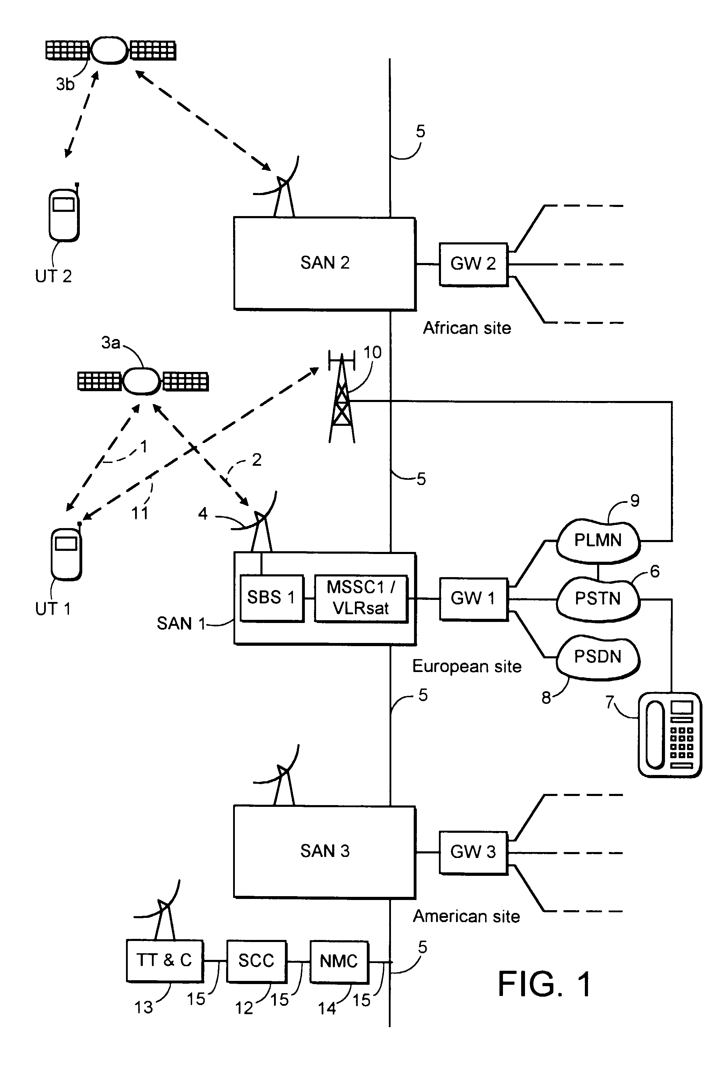

Referring to Figure 1, a schematic block diagram of a satellite mobile telecommunications network is shown corresponding to the ICO™ network. A mobile user terminal UT 1 in the form of a mobile telephone handset can communicate on a radio channel over a communication path 1a, 2a via an earth orbiting satellite 3a with a land-based satellite access node SAN 1. As shown schematically in Figure 1, SAN 1 is provided with a dish antenna arrangement that includes antenna 4 which can track the orbiting satellite 3a.

A number of the satellite access nodes SAN 1, 2, 3, etc are connected together to form a backbone network 5, which is connected through a number of gateways GW 1, 2, 3, etc to conventional land-based telephone networks. For example, the gateway GW 1, is connected to a land-based public switch telephone network 6 (PSTN), which permits connection to be made to a conventional telephone set 7. The gateway GW1 is additionally connected to a public switched data network 8 (PSDN) and a public land mobile network 9 (PLMN). Each of the gateways GW 1, 2, 3 may comprise existing International Switching Centres (ISCs) or mobile switching centres (MSCs) of the type used in GSM mobile networks.

As shown in Figure 1, the handset UT 1 is a dual mode device which can also communicate with the conventional land-based mobile network 9, that is shown schematically to include a transceiver station 10 which establishes a duplex link 11 with the user terminal UT 1. In this example, the network 9 is a GSM network. Thus the user can for example roam to the satellite network when out of range of the network 9.

For a fuller understanding of GSM, reference is directed to the various GSM Specifications issued by the European Telecommunications Institute (ETSI). Also reference is directed to "The GSM System for Mobile Communications" supra, for a more readable overview.

The satellite network is designed to provide world-wide coverage and the satellite 3a forms part of a constellation of satellites, which may be arranged in several orbits. The satellites may be arranged in a MEO constellation, for example with an orbital radius of 10,355 km, although the invention is not restricted to a particular orbital radius. In one example, two orbits of five satellites are used, which can be shown to provide coverage of a major part of the surface of the earth, in which for a 10° satellite elevation angle, one satellite can be accessed by the mobile handset all of the time and two satellites can be accessed for at least 80% of the time, thereby providing more than one concurrent or diverse communication path to the user terminal from a particular SAN. Additional satellites may be included in the constellation in order to provide redundancy and further diversity.

In this embodiment, two satellites 3a, 3b of the constellation are shown in a common orbit and the satellites are tracked by the antenna arrangement 4 of each SAN. The antenna arrangement 4 for each SAN may for example include five dish antennas to track satellites individually, although only one dish is shown for the SANs, in order to simplify the drawing.

The SANs are spaced around the earth in order to provide continuous coverage. In the example shown, SAN 1 may be located in Europe whereas SAN 2 may be located in Africa, SAN 3 in America and other SANs may be located elsewhere.

SAN 1 consists of a satellite base station SBS 1 which is coupled to the dish antenna arrangement 4 for tracking the satellites, the SBS 1 including transmitter and receiver circuits with amplifiers, multiplexers, de-multiplexer and codecs. A mobile satellite switching centre MSSC 1 is coupled to SBS 1 and includes a satellite visitor location register VLR_{SAT} 1. MSSC 1 couples communication signals to the backbone network 5 and to the SBS 1, so as to allow individual telephone calls to be established through the backbone network 5 and the duplex communication link 1, 2 via the satellite 3a, to the mobile terminal UT 1. Also, MSSC 1 is connected to the gateway GW 1 so as to provide a connection to the land based networks 6, 8 and 9. It will be understood that all the SANs are of similar construction with a respective VLR_{SAT} to maintain a record of the subscribers registered, namely the identity of each user that is making use of the SAN 1 as another point for signal communication.

In Figure 1, the SAN 2 is shown communicating with user terminal UT 2 via satellite 3b. For further details of the network, reference is directed to GB-A- 2 295 296 and EP-A-0869628.

The satellites 3a, 3b are in non geo-stationary orbits and comprise generally conventional hardware such as the Hughes HS 601. They may include features disclosed in GB-A-2 288 913.

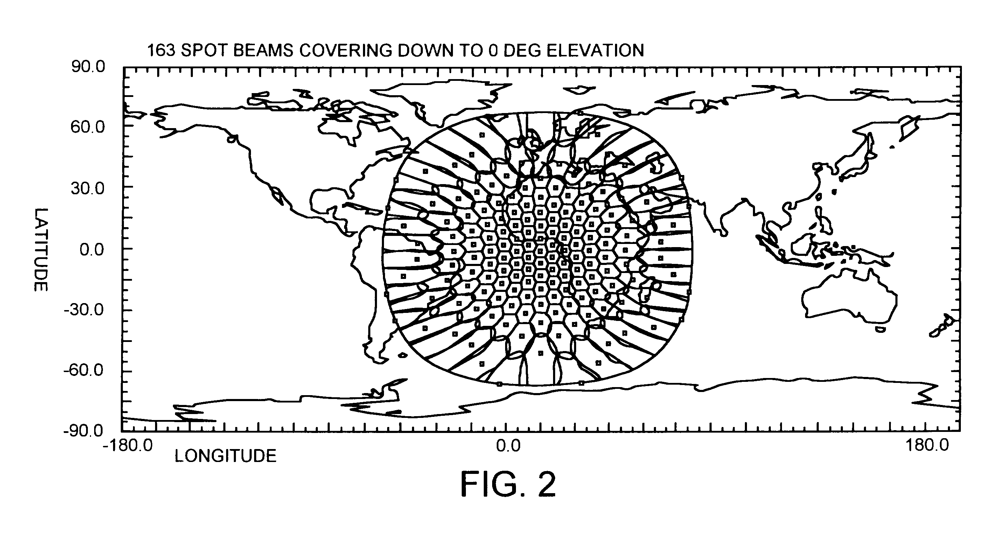

Each satellite 3a, 3b is arranged to generate an array of radio beams each with a footprint on the earth beneath the satellite, each beam including a number of different frequency channels and time slots as described in GB-A-2 293 725. The beams thus provide adjacent cellular areas which correspond to the cells of a conventional land-based mobile telephone network. In this example, each satellite produces a footprint of 163 spot beams on the earth in a fixed pattern as shown in Figure 2, which sweeps over the earth's surface as the satellite moves in its orbit.

The satellites are controlled by means of a satellite control centre 12 (SCC) and a telemetry tracking and control station 13 (TT&C), which are connected to a network management centre 14 (NMC) through a digital network 15 that is coupled to the backbone network 5. The SCC 12 and the TT&C 13 control operations of the satellites 3a, 3b, e.g. for setting the general transmission power levels and transponder input tuning, as directed by the NMC 14. Telemetry signals for the satellites 3a, 3b are received by the TT&C 13 and processed by the SCC 12 to ensure that the satellites are functioning correctly.

### Channel Configuration

During a telephone call, each of the user terminals communicates with a respective SAN via the satellites. A full duplex communication path is provided between the UT and the SAN. As referred to herein, communication from the SAN to the UT via the satellite is referred to as a "downlink", and communication directed from the UT via the satellite to the SAN is referred to as an "uplink". The signals may travel over diverse paths between UT 1 and SAN 1 via satellite 3a or 3b or both of them concurrently.

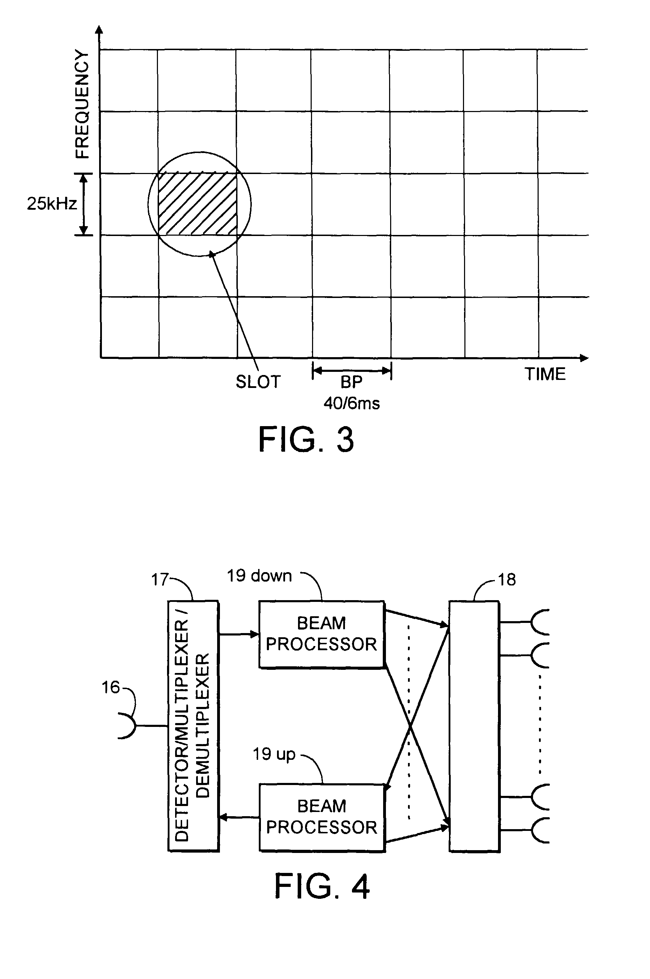

The general configuration of the transmitted signals is similar in some respects to those used for conventional GSM transmissions in a PLMN and makes use of a frequency diverse time division multiple access (TDMA) scheme. The basic unit of transmission between the SAN and UT is a series of about 100 modulated digital symbols, which is referred to as a burst. Bursts each have a finite duration and occupy a finite part of the radio spectrum. Thus, they are sent in time and frequency windows which are referred to as slots. The slots are positioned e.g. every 25kHz and recur in time every 40/6 ms (6.667ms). The duration of each slot is referred to as a burst period or BP. A graphical representation of a slot in the time and frequency domain is shown in Figure 3.

The signal transmission scheme includes channels for providing communication between the UTs individually and one of the SANs via a satellite, together with a number of common channels for all UTs within the cell defined by a particular satellite spot beam. The configuration of some of the signal channels will now be described in more detail.

### Individual Channels

### TCH/SACCH

For speech transmission, data is sent on an individual traffic channel TCH. Each TCH is provided with a slow rate associated control channel or SACCH. Each TCH consists of one slot every 6 BP and comprises a cycle of 25 slots. The SACCH is multiplexed in blocks each consisting of 12 consecutive slots. Two SACCH blocks are transmitted for every 25 slot cycle of the TCH and the remaining slot is used to transmit a timing reference so as to make up a 25 slot SACCH message for each 25 slot cycle of TCH. The TCH/SACCH is transmitted when the UT is in dedicated mode i.e. during a call.

It will be appreciated that with this configuration, 6 TCHs can be interleaved due to the fact that each TCH consists of a slot every 6 BP. The resulting interleaved structure thus provides a frame of 6 TCHs every 6 BP. In contrast to GSM, no frequency hopping is used from slot to slot of the channel.

### Common Channels

In addition to the channels TCH/SACCH for the individual UTs, a number of common channels are provided for all UTs within each cell corresponding to one of the satellite's spot beams, which will now be described in more detail.

### BCCH

A broadcast control channel BCCH is broadcast from the satellite to all UTs within a particular cell. The BCCH provides information which identifies the cell to the UT, which is received by the UT in idle mode i.e. when no call is being made. As each cell has is own BCCH, the relative signal strengths of the BCCHs at the UT can be used to determine which cell is to be used for TCH/SACCH communication with the UT.

System information concerning operational parameters for the UTs of a particular cell is transmitted to the UTs in the cell in BCCH messages. Each BCCH message consists of a number e.g. 4 slots, and is transmitted periodically e.g. every 100 BP.

### PCH/AGCH

The common channels also include a downlink paging logical channel PCH. This is used to transmit paging messages to a UT, for example to alert the user of the UT to an incoming call. Also an access grant logical channel AGCH indicates to the UT a channel allocated by the network, to be accessed by the UT for speech communication (TCH/SACCH) in order to receive the incoming call. The PCH consists of e.g. 1 to 10 slots every 25 BP and the AGCH consists of e.g. 2, 4, 6, 8, 10 or 12 slots every 25 BP.

### HPN

In the ICO™ network, an additional high penetration notification (HPN) channel is provided on the downlink for paging in the event that PCH paging is unsuccessful, for example when the reception of the user terminal is partially screened by buildings or the like. Reference is directed to our WO-A-98/23045 in which the HPN system is described in more detail.

### RACH

In addition to these downlink common channels, there is an uplink common channel which allows UTs within a cell to transmit access requests to the network, when it is desired to make a call from the UT. These requests thus occur essentially randomly in time and the channel is accordingly called the random access channel RACH. The RACH consists of e.g. of 2 slots every 3, 4 or 5 BP.

When a call is initiated from the UT, a RACH transmission is made by the UT in order to request a TCH/SACCH for the call from the SAN, and the UT then listens to all AGCH messages from the SAN/satellite to determine details of the channel to be allocated for the call. The AGCH messages comprise two bursts in this example. The UT similarly listens to PCH messages for calls initiated from the network via the SAN. For this purpose, the UT listens to 1 burst every 50, 150, 200, 300, 400 or 600 BPs in order to locate PCH messages.

The common channels are transmitted on beacon frequencies for the cell concerned such that BCCH is transmitted on frequency f1, PCH/AGCH on f2 and RACH on f3. Adjacent cells have different beacon frequencies to distinguish them from one another. In practice, the beacon frequencies may themselves cycle between different values within a respective allocated frequency slot to provide a cw frequency acquisition portion at a first frequency during a first burst period followed by a data burst at a second frequency during a second burst period.

Information concerning the configuration of these variable format common channels is transmitted to the UTs of a particular cell as system information in the BCCH messages in order to allow the operating parameters of the UTs to be set accordingly. Thus, for example, the configuration of the RACH and how the UT should listen to the slots of the PCH are sent to the UTs in the BCCH messages in order to allow the UTs to listen to the channels.

These channel configurations, together with other operating parameters for the UTs in the cell can change with time and data concerning the parameters are sent as system information to the UTs in the BCCH messages from the SANs, as will explained in more detail hereinafter.

### RBCCH

In certain circumstances, it is desirable to instruct the UTs to ignore some of the BCCH messages in order to reduce battery power consumption at each UT. To this end, the channel configuration includes a restricted BCCH notification (RBCCH). Various uses for the RBCCH have been proposed in our co-pending EP Patent Application 98301245.1. The RBCCH nominally comprises one slot every 100 slots and thus conveys less information than the four slot BCCH messages described above. It may be transmitted selectively to provide an alerting signal, to indicate changes in the BCCH and the UT may "wake-up" from a dormant state in response to the alerting signal to decode the BCCH to provide an update in its system information. Thus, each UT can, by monitoring the RBCCH selectively accept or reject certain parts of the BCCH messages. The rate at which the RBCCH is transmitted is variable and in the example described hereinafter, the RBCCH is transmitted at a faster rate of one slot every 25 BPs. Also, the RBCCH message slot itself can convey data as will be described in more detail hereinafter in relation to congestion control in accordance with the invention.

### Satellite

A schematic diagram of the major signal processing components of the satellite is given in Figure 4. Signals transmitted from one of the SANs are received by antenna 16 and directed to a detector/multiplexer/demultiplexer circuit 17. It will be understood that the signals transmitted from the SAN to the satellite contains a large number of TCH/SACCHs that are to be directed to individual UTs by the satellite. To this end, the satellite includes an array 18 of antennas that produce individual spot beams (for example 163) that correspond to a cellular configuration as previously described. A beam forming processor circuitry configuration 19_{down} receives the various TCH/SACCHs that are demultiplexed by circuit 17 and assembles them into multiplexed signals directed on 163 outputs to the spot beam antennas 18. The circuitry 19_{down} is also configured to include the downlink common control channels for each of the spot beams, including the BCCH, PCH and AGCH, on the basis of data transmitted to the satellite from the SAN.

For signals on the uplink from the individual UTs to the SAN, the various transmissions including RACH are received by the spot beam antennas 18 and directed to processing circuitry 19ᵤₚ which combines the various channels and passes them to the multiplexer configuration in circuit 17 for transmission through the antenna 16 to the SAN.

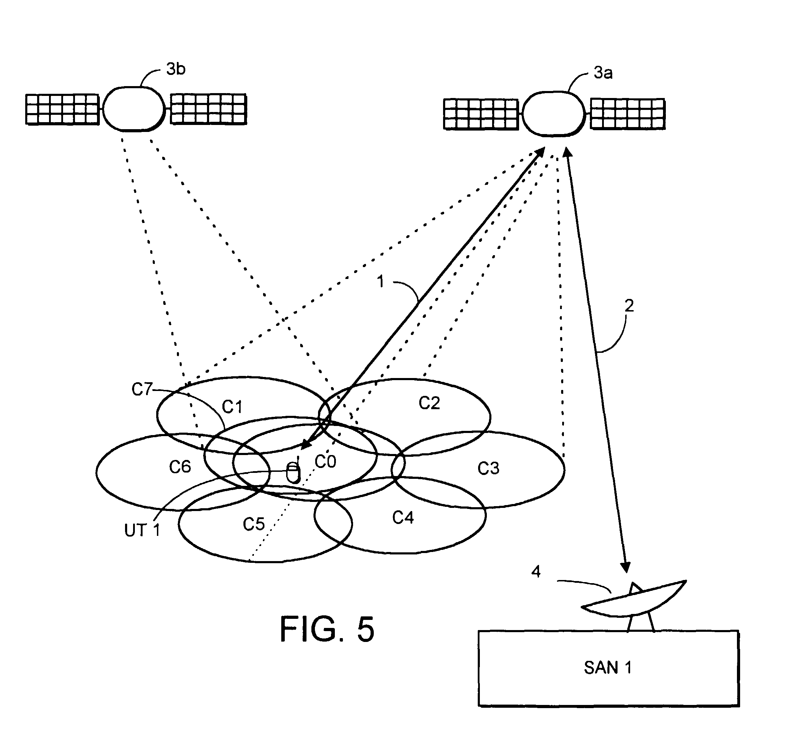

An example of cells C0 - C6 produced by the footprints of seven of the 163 spot beams from antenna 18 is shown schematically in Figure 5. The user terminal UT 1 lies within cell C0 but also can monitor the BCCHs of adjacent cells C1 - C6 and cells produced by other satellites that are within range for example cell C7 produced by satellite 3b.

The SAN 1,2 to satellite 3a, 3b uplinks are located in a frequency band in the region of 5 GHz and the corresponding downlinks are in the region of 7 GHz. The satellite 3a, 3b to UT 1,2 downlinks are in the region of 2.1 GHz and the corresponding uplinks are in the region of 1.9 GHz, although the invention is not restricted to these frequencies.

It will be understood that the foregoing description of the satellite circuitry is schematic and for further details, reference is directed to GB-A-2 288 913 *supra.*

### User terminal (UT 1)

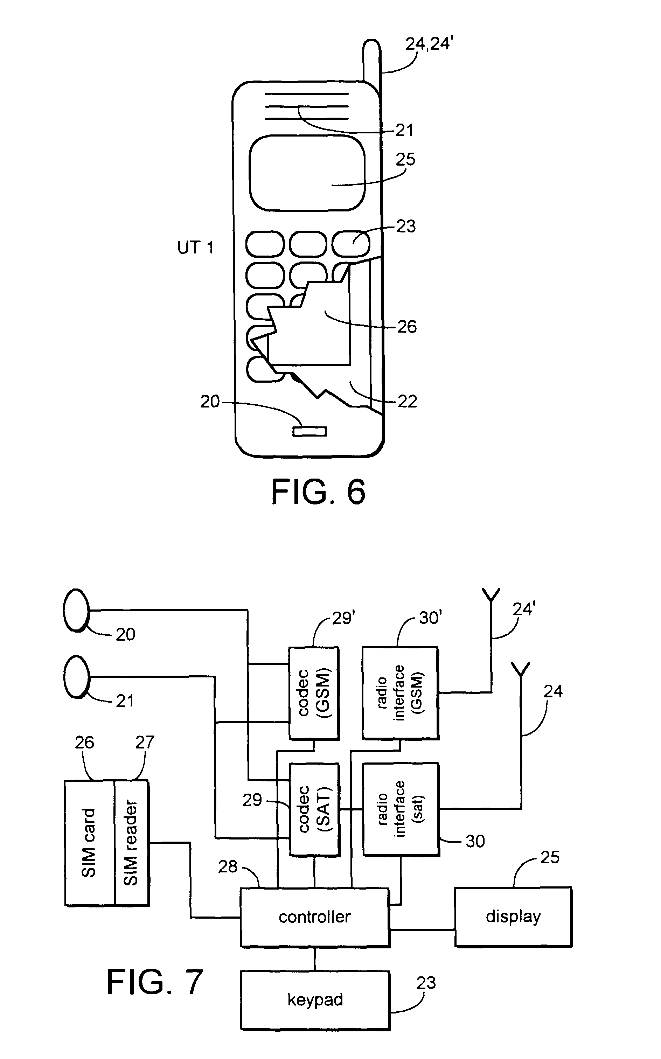

The mobile user terminal UT 1 is shown in more detail in Figures 6 and 7. It comprises a hand held device which is generally similar to a mobile telephone used for conventional terrestrial GSM networks. It is powered by a rechargeable battery (not shown) and is configured to operate either with the local terrestrial cellular network or to roam to the satellite network. Thus, in the example shown in Figure 1, the mobile handset UT 1 can operate either according to a land-based GSM protocol or according to the satellite network protocol. As shown in Figure 7, the handset comprises a microphone 20, an earpiece 21, a battery 22, a keypad 23, antennas 24, 24' and a display 25. The handheld unit UT 1 also includes a subscriber identification module (SIM) smartcard 26. The SIM contains subscriber specific information for amongst other things authenticating the user when a call is made. The SIM also contains details of an access class allocated to the subscriber. As explained hereinafter in more detail, there are ten normal access classes together with five special access classes. The subscriber is placed in one of the access classes by the network operator and the particular, allocated access class is recorded in the SIM.

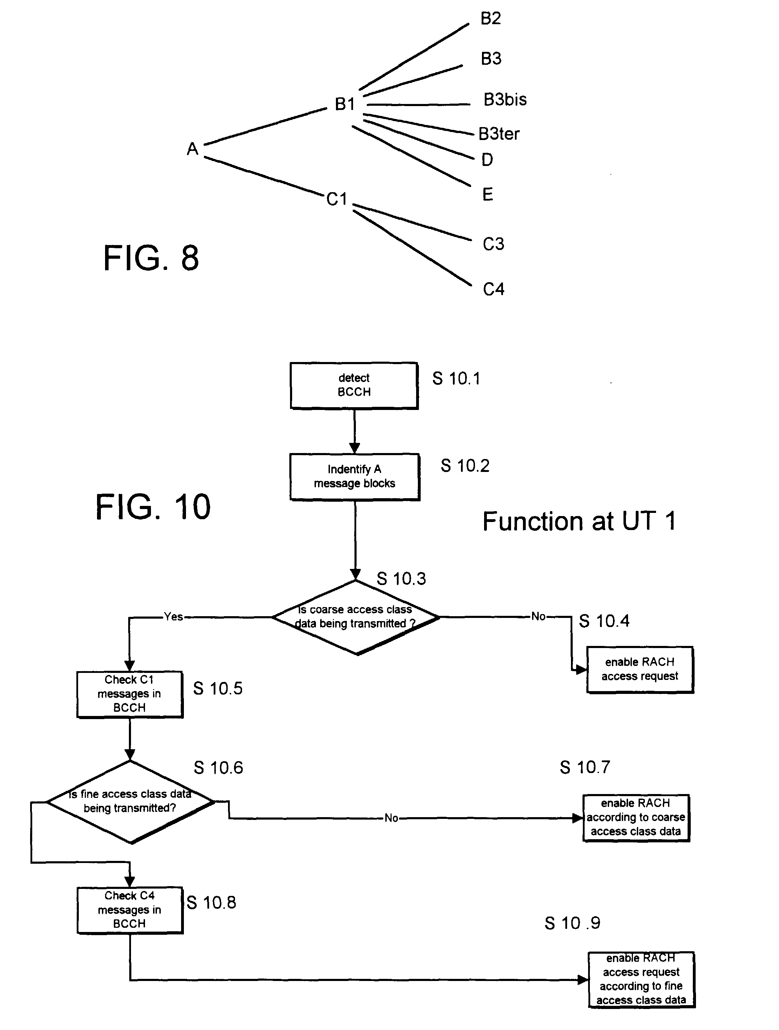

The circuit configuration of the handset UT 1 is shown in block diagrammatic form in Figure 8. The SIM card 26 is received in a SIM card reader 27 coupled to a controller 28, typically a microprocessor. The microphone and loudspeaker 20, 21 are coupled to first and second codecs 29, 29' coupled to conventional radio interfaces 30a, 30b connected to the antennas 24, 24' so as to transmit and receive communication signals, in a manner well known per se. The handset is capable of dual mode operation, with the codec 29, radio interface 30 and antenna 24 being used with the satellite network, and corresponding circuits 29', 30' and 24' being used with the GSM PLMN 9.

### Location Updating

The user terminal, when used with the satellite network can perform a location updating function to provide an estimation of the location of the terminal relative to the earth's surface and to convey the location information to the SAN for use in network initiated access. This is carried out by measuring the propagation delay and Doppler shift for signals received from one or more of the satellites 3 at the user terminal UT 1 using its controller 28. The resulting positional data is then transmitted from the user terminal to the SAN via satellite 3a and stored in VLR_{SAT}. This process is described in more detail in our GB-A-2 321 812.

### Service provision

The described network can provide service to customers in a number of different ways. For example, communication may be provided from UT 1 to UT 2 using the satellite backbone network 5 shown in Figure 1. Alternatively, telephone communication can be established between the telephone set 7 and UT 1 either via SAN 1 and satellite 3a, or, through PLMN 9, antenna 10 and link 11. For a further description of service options, reference is directed to our EP-A-0869628.

### BCCH Scheduling

The system information conveyed in the BCCH to UTs within the cell is scheduled in order to optimize the capacity of the BCCH. The UT is provided with the minimum system information needed according to the current status of the cell in order to perform its functions satisfactorily in the dedicated mode. The BCCH system information is classed into different categories A, B, C etc shown in Table 1.

**Table 1**

| Category | Nature of the system information | Function | Permissible delay |
|---|---|---|---|
| A | Cell selection parameters | Information needed to determine the potential use of the cell by the UT (paging, access, barring...) | Delay to find a first cell after switch-on, hence delay till first call after switch-on |
| B1 | Basic idle mode parameters | Information needed to receive the paging channel PCH in the cell | Delay from choice of cell to reception of paging |
| B2 | Supplementary idle mode parameters | Information needed for various secondary idle mode tasks such as monitoring neighbour cells | Delay from choice of cell to quick scanning of neighbourhood |
| B3 B3bis B3ter | Localization parameters | Information needed to determine the localisation and hence deciding when to do a location updating | Delay from choice of cell to determination whether a location updating is needed |
| C1 | Minimal access parameters | Information needed to access the cell | Delay from switch-on to first call |
| C3 | Dedicated mode parameters | Information useful to have, but not absolutely necessary before going to dedicated mode | Non critical: if not available, dedicated mode parameters are defaulted value until received on SACCH |
| C4 | RBBCH | Access control | Delay from cell choice to being able to access the network, if access restrictions apply |
| D | HPN mode parameters | Information allowing to go to HP mode, to be stored and used when leaving coverage or switch-on if out of coverage | Non critical |
| E | General information | Other information to be stored and used when out of coverage (for the moment this is limited to the list of BCCH frequencies in a wide area) | Non critical |

It can be seen from Table 1 that BCCH system information of types A, B1 and C1 are the most critical and are thus transmitted with relatively high priority whereas the other categories can be transmitted with a lesser priority. Thus, category A system information is accessed first by the UT. All the messages sent on the BCCH provide sufficient information to indicate when the next category A message is normally to be transmitted so that the category A data can be reliably detected. As previously mentioned each BCCH message block comprises four non-contiguous slots separated by 100 slots. Thus all the blocks contain data indicating when the next block with A data is to occur, in order to allow reliable detection of the A data. The other categories of data are transmitted in other ones of the BCCH message blocks at individual, generally (but not necessarily) slower rates as compared with the A data blocks and are arranged with a hierarchy as shown in Figure 8. The A blocks contain information concerning the occurrence of the other blocks. In the configuration shown in Figure 8, the A blocks contain data concerning the next occurrence of the B1 and C1 blocks, the B1 blocks contain data concerning the occurrence of the B2, B3, D and E blocks, which are transmitted at individual slower rates, and the C1 blocks contain data concerning the occurrence of the C3 and C4 blocks which are also transmitted at individual rates. The rate of the C4 messages is explained in more detail hereinafter This enables the UT to decode the individual categories of blocks reliably and unambiguously.

### Congestion control

When a subscriber wishes to make a call using mobile user terminal UT1, a RACH transmission is made from the UT in order to request a TCH/SACCH for the call from the SAN and the UT then listens to all AGCH messages from the SAN/satellite to determine details of the channel to be allocated to the call. However, if a number of UTs within a particular cell request a TCCH/SACCH in this way at the same time, the system will become overloaded and congested.

In conventional GSM systems, congestion control is achieved by the use of access classes which, as previously explained, are allocated to particular subscribers by a PLMN operator. Thus, the populations of UTs using a particular network are divided into ten balanced sub-populations each with an associated access class 1-10, so that by selecting individual access classes, groups of one or more sub-populations can be excluded from access to the network at a particular time in order to avoid congestion control. In addition to the ten access classes for usual subscribers, there are additionally provided five special access classes 11-15, of which class 11 is left open to the PLMN operator, 12 is provided for security services, 13 for public utilities, 14 for emergency services and 15 for PLMN staff. Each of the classes can be set to one or zero to indicate that the class is permitted or denied access to the network. A 17 bit code is needed to convey this access class information to the user terminals in a particular cell. Conventionally, this has been transmitted in the BCCH but, as previously explained, if the class information is transmitted in each BCCH message, an unnecessary overhead is imposed upon the system which can be avoided in accordance with the invention.

According to the invention, the access class data is configured as "coarse" and "fine" access class information. The coarse information is provided at a relatively slow rate to the user terminals and is representative of slowly changing requirements for congestion control whereas the fine access class information is provided at a higher rate in situations in which traffic on the network departs from the slowly varying pattern defined by the coarse access information.

The coarse access class information is formed by aggregating the conventional GSM UT access classes 1-10 into sub-groups of two, so as to provide coarse access classes *p q r s t,* as shown in Table 2 below. Coarse access classes *u v w x y* correspond to the special access classes 11-15 used conventionally in GSM.

**Table 2**

| | | | | | | | | | | |
|---|---|---|---|---|---|---|---|---|---|---|
| GSM access class | 1, 2 | 3, 4 | 5, 6 | 7, 8 | 9, 10 | 11 | 12 | 13 | 14 | 15 |
| Coarse access class | *p* | *q* | *r* | *s* | *t* | *u* | *v* | w | *x* | *y* |

This coarse access class information is transmitted in the A block messages of the BCCH. It will be understood that only an 8 bit message is needed to transmit the coarse access data rather than 17 bits hitherto for the conventional GSM access class scheme.

In accordance with the invention, a planning model is provided concerning traffic usage in terms of hours of the day and geographical areas on the earth so that congestion control can be predicted in accordance with the coarse access class scheme. This model is held at SBS 1. The UT can access the A block messages transmitted in the BCCH at a fixed interval e.g. every two minutes and follow the congestion control scheme according to the predetermined model thereof. The predetermined congestion control planning model may be computed at NMC 14 as a function of a history of call utilisation for the network in particular geographical areas at particular times. The model may be adaptively changed with time as a result of long term variations of utilisation of the network and supplied by NMC 14 to SBS1 at SAN 1.

Additionally, in accordance with the invention, fine access class information is transmitted to the UTs on occasions when the call traffic exceeds the predetermined levels defined by the planning map produced by NMC 14. The configuration of the fine access class data is shown in Table 3 from which it will be seen that each fine access class 1-15 corresponds to the conventional GSM access classes, so that individual access classes can be addressed.

**Table 3**

| | | | | | | | | | | | | | | | |
|---|---|---|---|---|---|---|---|---|---|---|---|---|---|---|---|
| GSM access class | 1 | 2 | 3 | 4 | 5 | 6 | 7 | 8 | 9 | 10 | 11 | 12 | 13 | 14 | 15 |
| Fine access class | 1 | 2 | 3 | 4 | 5 | 6 | 7 | 8 | 9 | 10 | 11 | 12 | 13 | 14 | 15 |

The fine access class information is transmitted in the RBCCH. It is transmitted as a 16 bit signal, but, as previously explained, is only transmitted on occasions when the traffic demand exceeds the level predicted by the traffic planning map. For most of the time call traffic will accord with the predetermined map and thus the fine access class information only needs to be transmitted intermittently on occasions when the call traffic exceeds the levels set by the planning map.

Referring back to the BCCH message scheme described with reference to Table 1, the coarse access class information is provided in the A messages. The C1 messages indicate whether RBCCH is being sent. The C1 messages have a higher periodicity than the A messages. If it is being sent, the fine access class information is provided in RBCCH in messages C4, which in this situation are transmitted with higher periodicity than the C1 messages. The fine access class information comprises a 16 bit message - one bit for each access class, in which zero = permitted access and one = access denied.

The user terminals are each configured to detect BCCH on a *de minimiss* basis in order to conserve battery power. As a default, the UT is configured to interrogate BCCH A messages regularly at a period of e.g. two minutes, selected to conserve battery power but nevertheless maintain reasonably up to date BCCH parameters at the UT. This provides the coarse access class information to the UT. It will be understood that the congestion control needed to conform to the traffic planning model changes relatively slowly as it is determined mainly by the time of the day and the geographical location of the BCCH cell concerned. As a result, the coarse access class information can satisfactorily control traffic in response to the slowly varying congestion control required by the traffic planning model.

The fine access class information transmitted in the RBCCH is repeated e.g. every 25BPs (1/6 sec), i.e. with a higher periodicity than the coarse access control information in the A messages, and thus can provide congestion control rapidly and respond to fast changes produced which depart from the traffic planning model produced by NMC 14. The fine access class information thus in this example allows control every 1/6 seconds at the UT. Thus, the fine access class information transmitted on RBCCH can be used to deal with rapidly changing variations from the traffic planning model, although the fine access control information need only be transmitted when such variations occur, thereby reducing the amount of data transmitted, with a consequent power saving in the UT and the satellite.

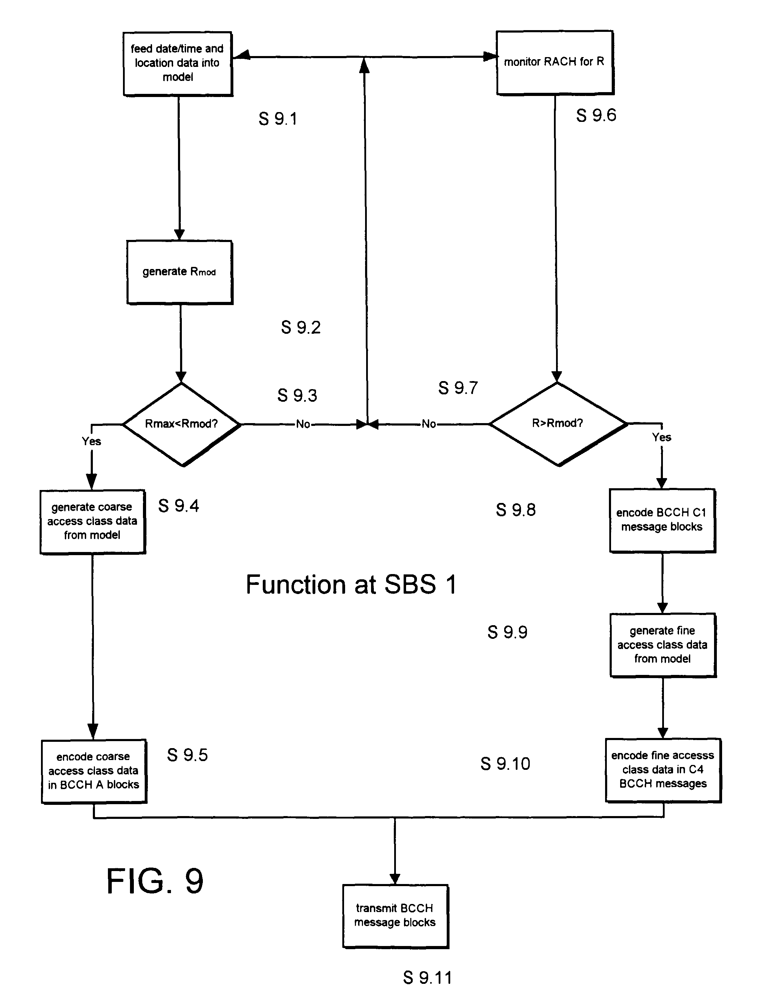

Figure 9 illustrates activities at SBS 1, for transmitting the access class information to the UTs in a particular cell. At step S9.1, data concerning the time and date, together with cell location on the earth, are fed into the traffic planning model, that has been received previously from NMC 14 (Figure 1). The model generates a prediction of the number of access requests R_{mod} to occur at that time. This is shown at step S9.2.

At step S9.3, the value of R_{mod} is compared with the maximum level Rₘₐₓ in order to determine whether some of the access classes need to be denied access in order to limit the number of call attempts made. As previously explained, this can be carried out according to the coarse access class scheme due to the slowly varying nature of R_{mod} produced by the traffic planning model.

If coarse access control is needed, an appropriate set of coarse access class information is produced at step S9.4. In this data, one of more of the coarse access classes p-t shown in Table 2 is denied access to the network as explained in more detail later.

At step S9.5, the coarse access class information developed at step S9.4 is encoded into the BCCH category A messages for onward transmission to UTs in the cell concerned.

At step S9.6, the number of access requests R which actually occur from UTs in the cell is monitored, by monitoring the requests received on RACH. The value of R over a particular measurement period is compared at step S9.7 with the value R_{mod} predicted by the traffic planning model. If the actual value R is less than the predicted value, the access class control can proceed according to the coarse access class data generated at step S9.4. However, if the actual value R exceeds the predicted value, fine access class data needs to be generated from the model. Furthermore, as previously explained, the provision of fine access class data is notified in the BCCH in the C1 message block and thus, at step S9.8, an appropriate notification is encoded into the C1 message blocks of BCCH.

At step S9.9, the fine access class data is generated from the traffic planning model such that a 16 bit fine access control message is produced, which selectively disables access to one of or more of the ten normal access classes 1-10 as shown in Table 3. The special access classes 11-15 are also included.

At step S9.10, the fine access class data generated at step S9.9 is encoded into the C4 BCCH messages for transmission in the RBCCH to the cell.

Then at step S9.11 the various BCCH message blocks, including the A messages and the RBCCH message blocks, are transmitted via satellite 3a to the cell concerned.

The way in which the BCCH messages are decoded at the user terminal UT 1 will now be considered with reference to Figure 10. At step S10.1, the BCCH messages are detected by means of the radio interface 30' and codec 29' shown in Figure 7 and the resulting signals are processed by controller 28.

At step S10.2, the A message blocks of the BCCH are identified.

As previously explained, each user terminal has already been allocated a particular normal access class 1-10 corresponding to a conventional GSM access class, as shown in Table 2. In this example, it is assumed that the SIM 26 in UT 1 has a stored access class 3 as shown in Table 2, which corresponds to coarse access class q.

At step S10.3, the A message blocks are analysed by controller 28 to determine whether coarse access class data is being transmitted in the messages. If not, no access class control is needed because there is no congestion and hence at step S10.4, the controller permits unrestricted access for call requests to be made, on RACH from UT 1.

However, if coarse access class data is being transmitted in the A message blocks, access class control is required. The control may be required according to the coarse or fine data, depending on whether fine data is additionally being transmitted.

In order to check for the presence of fine access class data in the BCCH, a determination is made at step S10.5 as to whether a notification has been provided in the C1 messages of the BCCH, indicative of the presence of fine access class data.

If at step S10.6, it is determined that no C1 message is found, thereby indicating no transmission of fine access class data, it is appropriate to control RACH access requests according to the coarse access class data, at step S10.7. Thus, at step S10.7, if the coarse access class data indicates that coarse access class q is to be denied access, call requests on the RACH from UT 1 will be denied access to the network in order to achieve congestion control. As previously explained, this situation occurs when a "hot spot" predicted by the traffic planning model of NMC 14 indicates that congestion needs to be controlled according to the traffic planning model, and furthermore, that the actual number of call requests does not exceed the maximum value predicted by the model.

However, if it is found at step S10.6 that fine access class data is being transmitted, the controller checks at step S10.8 the C4 messages in the BCCH, which correspond to the RBCCH. In this situation, the RBCCH will contain a 16 bit message, providing the fine access class data.

As previously mentioned, the access class for UT 1 corresponds to GSM access class 3 and the fine access class information provides details of this class, as shown in Table 3. Thus, at step S10.9, the controller 28 enables a user to make a call request on RACH unless the fine access class 3 is denied access according to the message detected at step S10.8. Thus, in the event that fine access class control is needed when the number of call requests exceptionally exceeds the level predicted by the planning model of NMC 14, class control can be carried out rapidly to deal with rapid changes on a exception basis, when the number of traffic requests exceeds the predicted value given by the planning model.

When the SBS determines that the traffic has returned to the predicted level, it can stop sending the RBCCH update information C and rely on the coarse access class information. Whilst the fine access class data is transmitted, the UT can respond rapidly to changes in enablement of its class because the RBCCH is transmitted and detected at a rapid rate, typically every 1/6 second. However, when the traffic is returned to its predicted level, the compressed, coarse access class data can satisfactorily control congestion on the basis of the data transmitted in the A blocks of the BCCH, which may be detected once every two minutes.

Many modifications and variations fall within the scope of the invention. For example, although the method of congestion control has been described in relation to the ICO™ system, it will be appreciated that it could be equally well applied to any of the satellite mobile telecommunications networks described in Scientific American ***supra.*** The technique could also be applied to a conventional land-based mobile telephone network, for example the network 9 shown in Figure 1. Also, whilst the user terminals UT have been described as mobile telephone handsets, it will be understood that they may be semi-mobile e.g. mounted on a ship or aircraft and may actually be stationary during operation and may handle not only voice calls but also data, facsimile, e-mail and short messages.

## Claims

1. A method of controlling call traffic congestion in a cellular telecommunications network wherein user terminals are grouped in different predetermined access classes for controlling accessibility to the network, comprising causing to be broadcast to the user terminals periodically, cell broadcast messages that include coarse access class information corresponding to subgroups of said different predetermined access classes permitted or denied access to the network in response to a first traffic congestion situation, and fine access class information corresponding to individual ones of the access classes in said subgroups permitted or denied access to the network in response to a second different traffic congestion situation.

2. A method according to claim 1 including providing a traffic planning model to predict call traffic demand in the network, and determining when the first and second traffic congestion situations occur with reference to the model.

3. A method according to claim 2 including determining an occurrence of said first traffic congestion situation by determining when the call traffic demand predicted by the traffic planning model exceeds the capacity of the network.

4. A method according to claim 2 or 3 including determining an occurrence of said second traffic congestion situation by monitoring actual demand for access to the network, and determining when the actual demand exceeds the demand predicted by the traffic planning model.

5. A method according to claim 2, 3 or 4 including providing the traffic planning model such as to predict traffic demand as a function of geographical area and time of day.

6. A method according to any preceding claim wherein the cell broadcast messages are classified into different categories that are transmitted at individual rates with different priorities, the method including transmitting said coarse access class information in one of said message categories with a relatively low periodicity and transmitting the fine access class information in another one of the message categories with a relatively high periodicity.

7. A method according to claim 5 including providing an indication that the fine access control data is being transmitted in a cell broadcast message with a periodicity intermediate said relatively high and low periodicities.

8. A method according to any preceding claim wherein the network comprises a satellite telecommunications network, including transmitting messages containing the coarse and fine access class information from a satellite access node towards at least on satellite of the network.

9. A method of operating a user terminal for a cellular telecommunications network to control call traffic congestion therein wherein user terminal has been allocated an access class from a plurality thereof for controlling accessibility to the network, comprising receiving cell broadcast messages that include coarse access class information corresponding to subgroups of said different predetermined access classes permitted or denied access to the network in response to a first traffic congestion situation, and fine access class information corresponding to individual ones of the access classes in said subgroups permitted or denied access to the network in response to a second different traffic congestion situation, and controlling access of the user terminal to the network as a function of said fine access class information or said coarse access class information.

10. A method according to claim 9 including determining when the fine access class information is being transmitted, and only detecting said fine access class information when it is determined to be transmitted.

11. A method according to claim 9 or 10 including detecting said coarse access class information at a relatively slow rate and said fine access class information at a relatively high rate

12. A method according to claim 9, 10 or 11 wherein the cell broadcast messages are classified into different categories that are transmitted at individual rates, with said coarse access class information in one of said message categories with a relatively low rate and the fine access class information in another one of the message categories of a relatively high rate, the method including monitoring said messages low rate to determine the coarse access class information, and monitoring said messages of high rate to determine said fine access class information.

13. A method according to claim 12 wherein an indication that the fine access control data is being transmitted is provided in a cell broadcast messages transmitted at a rate intermediate said relatively high and low rates, and including detecting said messages of intermediate rate to determine whether to detect said messages high rate to determine said fine access class information.

14. A subsystem for a cellular telecommunications network operable to control call traffic congestion in wherein user terminals are grouped in different predetermined access classes for controlling accessibility to the network, comprising a transmitter to cause to be broadcast to the user terminals periodically, cell broadcast messages that include coarse access class data corresponding to subgroups of said different predetermined access classes permitted or denied access to the network in response to a first traffic congestion situation, and fine access class information corresponding to individual ones of the access classes in said subgroups permitted or denied access to the network in response to a second different traffic congestion situation.

15. A subsystem according to claim 14 including processing circuitry to provide a traffic planning model to predict call traffic demand in the network, and to determine when the first and second traffic congestion situations occur with reference to the model.

16. A subsystem according to claim 15 including means for determining an occurrence of said first traffic congestion situation by determining when the call traffic demand predicted by the traffic planning model exceeds the capacity of the network.

17. A subsystem according to claim 15 or 16 including means for determining an occurrence of said second traffic congestion situation by monitoring actual demand for access to the network, and determining when the actual demand exceeds the demand predicted by the traffic planning model.

18. A subsystem according to claim 15, 16 or 17 including means to provide the traffic planning model such as to predict traffic demand as a function of geographical area and time of day.

19. A subsystem according to any one of claims 14 to 18 wherein the cell broadcast messages are classified into different categories that are transmitted at individual rates, and including means for transmitting said coarse access class information in one of said message categories with a relatively low rate and transmitting the fine access class information in another one of the message categories with a relatively high rate.

20. A subsystem according to claim 19 including means for providing an indication that the fine access control data is being transmitted in a cell broadcast message at a rate intermediate said relatively high and low rates.

21. A subsystem according to any one of claims 14 to 20 and comprising a satellite access node for a satellite telecommunications network, wherein the transmitter is configured to transmit messages containing the coarse and fine access class information towards at least one satellite of the network.

22. A user terminal for a cellular telecommunications network operable to control call traffic congestion therein wherein user terminal has been allocated an access class from a plurality thereof for controlling accessibility to the network, comprising receiver circuitry to receive cell broadcast messages that include coarse access class information corresponding to subgroups of said different predetermined access classes permitted or denied access to the network in response to a first traffic congestion situation, and fine access class information corresponding to individual ones of the access classes in said subgroups permitted or denied access to the network in response to a second different traffic congestion situation, and a controller to control access of the user terminal to the network as a function of said fine access class information or said coarse access class information when received.

23. A user terminal according to claim 22 wherein the receiver circuitry is configured to determine when the fine access class information is being transmitted, and only to detect said fine access class information when it is determined to be transmitted.

24. A user terminal according to claim 22 or 23 wherein the receiver circuitry is operable to detect said coarse access class information at a relatively slow rate and said fine access class information at a relatively high rate

25. A user terminal according to claim 22, 23 or 24 wherein the cell broadcast messages are classified into different categories that are transmitted at individual rates, with said coarse access class information in one of said message categories with a relatively low rate and the fine access class information in another one of the message categories of a relatively high rate, the user terminal including means for monitoring said messages of relatively slow rate to determine the coarse access class information, and means for monitoring said messages of relatively high rate to determine said fine access class information.

26. A user terminal according to claim 25 including means for detecting messages of a rate intermediate said relatively high and low rates to determine whether to detect said messages of high rate to determine said fine access class information.
